# EUROPEAN PATENT SPECIFICATION

(11) **EP 3 622 013 B1**
(45) Date of publication and mention of the grant of the patent: **13.04.2022**
(21) Application number: 18729851.8
(22) Date of filing: 10.05.2018
(51) Int. Cl.: C08J 9/14, C08L 25/04

(54) **Z-HFO-1336MZZ BLOWING AGENT BLENDS FOR FOAMING THERMOPLASTIC POLYMERS COMPRISING POLYSTYRENE**
Z-HFO-1336MZZ-TREIBMITTELMISCHUNGEN ZUM SCHÄUMEN VON THERMOPLASTISCHEN POLYMEREN ENTHALTEND POLYSTYROL
MÉLANGES D'AGENT D'EXPANSION Z-HFO-1336MZZ DESTINÉS À L'EXPANSION D'UN POLYMÈRE THERMOPLASTIQUE COMPRENANT DU POLYSTYRÈNE

(30) Priority: 10.05.2017 US 201762504261 P
(43) Date of publication of application: 18.03.2020
(73) Proprietor: The Chemours Company FC, LLC, Wilmington, Delaware 19801 (US)
(72) Inventor: KONTOMARIS, Konstantinos, Wilmington Delaware 19808 (US); MCRAE, Tim, Georgetown Ontario L7G 5N3 (CA)
(74) Representative: Dannenberger, Oliver Andre
(86) International application number: PCT/US2018/032048
(87) International publication number: WO 2018/209072

(56) References cited:
- WO-A2-2008/118627
- WO-A2-2011/084553

## Description

### Field of the Disclosure

This invention relates to the use of Z-HFO-1336mzz blends as blowing agents for thermoplastic polymer comprising polystyrene.

### Description of the Related Art

WO 2008/118627 (assigned to Dow Global Technologies) discloses the discovery of blowing agents that have a zero ODP and GWP of less than 50 and solubility in alkenyl polymers, notably polystyrene, that enable these blowing agents comprising more than 50 wt% of the total blowing agent to produce quality foam. Table 2 discloses HFO-1336mzz (CF₃-CH=CH-CF₃) having a moderate solubility as compared to the Table 1 compounds. It is further disclosed that while the alkenes of Table 2 can comprise over 50 wt% of the blowing agent composition, additional blowing agent that is more soluble in the polymer is necessary to achieve quality foam (p. 15, I. 9-12). Quality foam is described as the foam having an average cell size of 0.02 to 5 mm, being close-celled, and having a density of 64 kg/m³ or less. Indicia of lack of quality are small average cell size, density greater than 64 kg/m³, high open cell content and blowholes (p. 2, I. 9-13). The quality foam is also essentially free of blowholes, which are described as being the size of multiple cell diameters and which can rupture at the foam surface to give an irregular surface (p. 2, I. 15-20). The blowholes that do not rupture can be called macrovoids, and the irregular surface caused by the rupturing blowholes is the opposite of a smooth surface (skin).

WO 2011/084553 discloses various uses of Z-HFO-1336mzz, for example as blowing agent in a process for preparing a polymer foam.

### SUMMARY

A process is provided for preparing a thermoplastic polymer foam, comprising providing a foamable composition comprising a thermoplastic polymer and a blowing agent, wherein the blowing agent comprises from 10% to 60% by weight Z-1,1,1,4,4,4-hexafluoro-2-butene (Z-HFO-1336mzz) and from 40% to 90% by weight 1,1-difluoroethane (HFC-152a), and wherein said thermoplastic polymer comprises polystyrene homopolymer, a polystyrene copolymer, styrene-acrylonitrile copolymer, or blends thereof, and expanding said foamable composition to produce a closed cell, smooth skin polymer foam, having a density of less than 42 kg/m³ .

In another embodiment, disclosed is a foam product comprising a thermoplastic polymer selected from the group consisting of polystyrene homopolymer, a polystyrene copolymer, styrene-acrylonitrile copolymer, or blends thereof, defining a plurality of cells having an average cell size, and a blowing agent comprising from 10% to 60% by weight Z-1,1,1,4,4,4-hexafluoro-2-butene (Z-HFO-1336mzz) and from 40% to 90% by weight 1,1-difluoroethane (HFC-152a), having a density of less than 42 kg/m³, according to ISO method 845-85, wherein the thermoplastic polymer has a melt flow rate of less than 25 g/ 10 min.

### DETAILED DESCRIPTION

The thermoplastic polymer being foamed according to the present invention comprises a polystyrene.

The polystyrene can be styrene homopolymer or can contain copolymerized monomer other than styrene, i.e. polystyrene copolymer. The thermoplastic polymer can also be a blend of polystyrene with other thermoplastic polymer. The other thermoplastic polymer can also be a copolymer of styrene with monomer other than styrene. A preferred monomer other than styrene is acrylonitrile. Generally, the thermoplastic polymer is selected from the group consisting of polystyrene homopolymer, a polystyrene copolymer, styrene-acrylonitrile copolymer, or blends thereof.

Whether the thermoplastic polymer being foamed is polystyrene or blends of polystyrene with other thermoplastic polymer, styrene is preferably the dominant polymerized monomer (unit) in the thermoplastic polymer being foamed. More preferably, the polymerized units of styrene constitute at least 70 mol % or at least 80 mol% or at least 90 mol% or at least 100 mol% of the polymerized monomer units making up the thermoplastic polymer being foamed.

When the thermoplastic polymer contains styrene copolymer, the amount of other monomer copolymerized with the styrene, is such that the styrene content of the copolymer is at least 60 mol% of the copolymer, preferably at least 70 mol%, or at least 80 mol% or at least 90 mol% of the copolymer, based on the total mols (100%) making up the copolymer. This applies whether the styrene copolymer is the only styrene-containing polymer in the thermoplastic polymer or is a blend with other thermoplastic polymer, such as styrene homopolymer or other styrene copolymer.

Preferably, the thermoplastic polymer being foamed is entirely polystyrene, notably the styrene homopolymer. When the thermoplastic polymer being foamed is a blend of polystyrene and other thermoplastic polymer as described above, the polystyrene component of this blend is preferably styrene homopolymer constituting at least 80 wt% of the combined weight of polystyrene and other thermoplastic polymer.

The molecular weight of the thermoplastic polymer comprising polystyrene being foamed is sufficiently high to provide the strength necessary for the requirements of the foam application. The strength requirement determines the minimum density of the foamed product. The high molecular weight of the thermoplastic polymer comprising polystyrene also contributes to the strength of the foamed product. An indicator of molecular weight is the rate at which the molten polymer flows through a defined orifice under a defined load. The lower the flow, the higher the molecular weight. Measurement of the melt flow rate is determined in accordance with ASTM D 1238 at 200°C and using a 5 kg weight on the molten polymer. The weight of molten polymer flowing through the orifice in a defined amount of time, enables the melt flow rate to be reported in g/10 min. Preferably the melt flow rate of the thermoplastic polymer comprising polystyrene is no greater than 20 g/10 min, more preferably no greater than 15 g/10 min, and most preferably, no greater than 10 g/10 min. Surprisingly the higher the molecular weight (lower the melt flow rate), the better the foaming result, especially with respect to the attainability of low density foamed products, while still achieving smooth skin on the foamed product. In one embodiment, the minimum melt flow rate for all the melt flow rates disclose herein is at least 1 g/10 min., whereby the melt flow rate ranges disclosed herein are 1 to 25, 1 to 20, 1 to 15, and 1 to 10, all values being g/10 min.

The references to thermoplastic polymer comprising polystyrene also apply to polystyrene by itself. Thus, for example, the disclosure of thermoplastic polymer comprising polystyrene in the preceding paragraph can be replaced by the disclosure polystyrene.

In one embodiment the invention is a foam product, comprising: a polymer matrix comprising a thermoplastic material selected from the group consisting of polystyrene, polystyrene copolymers, styrene-acrylonitrile copolymer, or blends thereof, defining a plurality of cells having an average cell size of from 0.02 to 5 mm, and a blowing agent comprising Z-HFO-1336mzz (Z-1,1,1,4,4,4-hexafluoro-2-butene) and 1,1-difluoroethane (HFC-152a), having a density of less than 42 kg/m³, wherein the thermoplastic polymer has a melt flow rate of less than 25 g/ 10 min. The blowing agent comprises from 10% to 60% by weight Z-1336mzz and from 40% to 90% by weight HFC-152a.

In other embodiments, the molten composition being foamed can contain additives other than the polymer being foamed and the Z-HFO-1336mzz blowing agent, such as co-blowing agent, nucleating agent, flame retardant, cell stabilizer agent, surfactant, preservative colorant, antioxidant, reinforcing agent, filler, antistatic agent, IR attenuating agent, extrusion aid, plasticizer, viscosity modifier, and other known additives, all in the amount to obtain the effect desired. The present invention is not limited to any particular additive, except as may be specified in any claim appended hereto.

Preferred examples of nucleating agent are talc, graphite and magnesium silicate.

Examples of preferred flame retardants include tetrabromo-bis phenol A and polymeric flame retardants.

The molten composition is in effect the foamable composition. The amount of blowing agent in the molten composition will depend on the amount of additives other than blowing agent and the density desired in the foamed product. In one embodiment, the amount of blowing agent, will be from 5 to 20 wt%. In another embodiment, the amount of blowing agent will be from 5 to 15 wt%, based on the weight of the molten composition. In various embodiments, this can vary depending on the desired density of the foam, and the ratio of the two blowing agents.

It has unexpectedly been discovered that while Z-1336mzz by itself has only low to moderate solubility in the thermoplastic polymers used in the present compositions, that the combination of Z-1336mzz and HFC-152a has greater solubility in the thermoplastic polymers than either blowing agent alone. One benefit of this unexpected solubility is that, while it requires the use of about 20% weight percent Z-1336mzz by itself to produce a foam density of about 45 kg/m³, it requires only 10% by weight of the blend of Z-1336mzz and 152a to produce lower densities, such at 30-40 kg/m³.

In one embodiment, the process of the present invention is carried out using an extruder to form the molten composition and to extrude it to form the foamed product. The steps (a)-(d) are practiced in and using an extruder. The thermoplastic polymer comprising polystyrene forms the feed to the extruder. The blowing agent(s) is (are) preferably fed into the extruder at a location intermediate to the feed and extrusion ends of the extruder, typically into the molten composition that is created as the extrusion screw advances the feeds to the extruder along its length. The other additives to the molten composition are added where convenient and as may be dictated by the state of the additive. For example, solid additives can be conveniently be added to the feed end of the extruder, possibly as a mixture with the polymer feed in particulate form to the extruder. The molten composition within the extruder is extruded through a die, thereby allowing the foamable composition to expand into a foamed product. The foamed product, which can be in such forms as sheet, plank, rod, or tube, is then cooled.

In the region within the extruder where the composition is melted to form the molten composition, this melting occurring by the input of heat and the heat developed in the mixing process forming the melt, this is considered the melt mixing region. In one embodiment, the temperature is at least 185°C, more preferably at least 190°C or at least 200°C or at least 210°C. In another embodiment, the maximum temperature for all the melt mixing temperatures disclosed herein is 250°C. The melt mixing temperatures disclosed herein are the temperatures of the melt in the mixing zone at the time of mixing. In one embodiment, the pressure under which the melt mixing is carried out is at least 3000 psi (207 bar), more preferably at least 3500 psi (241 bar), more preferably at least 4000 psi (276 bar).

In one embodiment, the maximum value for all the minimum pressures disclosed under which the melt mixing is carried out is no greater than 5000 psi (345 bar).

The pressures disclosed herein are gauge pressures.

In the region within the extruder where the molten composition is extruded, the molten composition is cooled so that the temperature at which the extrusion is carried out is preferably at least 105°C, more preferably 110°C, more preferably at least 125°C. In one embodiment, the maximum value for all the minimum extrusion temperatures disclosed herein is preferably no greater than 140°C. The extrusion temperatures disclosed herein are the temperature of the melt at the time of extrusion.

In one embodiment, the extrusion is preferably carried out with a pressure of at least 1500 psi (103 bar), more preferably at least 1600 psi (110 bar).

The maximum value for the minimum extrusion pressures disclosed herein is preferably no greater than 2000 psi (138 bar).

The extrusion pressure is the pressure inside the extrusion die.

The disclosures of multiple ranges for melt flow rate, temperature and pressure above can be used in any combination in the practice of the present invention to obtain the particular foamed structure desired. For example, melt mixing pressures of 3000 to 5000 psi (207 to 345 bar) are preferred for achieving low foam densities of the foamed product, and this temperature range can be used with any of the melt mixing and extrusion temperature ranges to form any of the smooth-skin, closed cell foam product densities disclosed herein. The same is true for the melt extrusion pressure range of 1500 to 2000 psi (103 to 138 bar) together with the 3000 to 5000 psi (207 to 345 bar) pressure range for melt mixing. Most preferably, the two preferred pressure ranges, for melt mixing (207 to 345 bar) and extrusion (103 to 138 bar) are used together. The melt flow rates for the polymer being foamed of no greater than 25, 20, 15, and 10, and as little as at least 1, all values being in g/10 min, can be used with any of these combinations of pressure and temperatures, depending on the foamed product result desired.

The conditions (a)-(d) can be used in any combination with any of the polymer melt flow rates and compositions and blowing agent compositions disclosed above.

Preferably the thermoplastic polymer comprising polystyrene and polystyrene itself exhibits the following foamed product attributes:
Closed cells - at least 80%, preferably at least 90% and most preferably at least 95%, and having an average cell size of 0.02 to 5 mm. Closed cell content can be measured according to ASTM method D6226-05.

Density no greater than 40 kg/m³ and more preferably no greater than 35 kg/m³ or 30 kg/m³. Density can be measured according to ISO method 845-85.

The minimum required strength (compressive) of the foamed product will dictate that the density be at least 16 kg/m³.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus.

The transitional phrase "consisting of" excludes any element, step, or ingredient not specified. If in the claim, such would close the claim to the inclusion of materials other than those recited except for impurities ordinarily associated therewith. When the phrase "consists of" appears in a clause of the body of a claim, rather than immediately following the preamble, it limits only the element set forth in that clause; other elements are not excluded from the claim as a whole. The transitional phrase "consisting essentially of" is used to define a composition, method that includes materials, steps, features, components, or elements, in addition to those literally disclosed provided that these additional included materials, steps, features, components, or elements do not materially affect the basic and novel characteristic(s) of the claimed invention, especially the mode of action to achieve the desired result of any of the processes of the present invention. The term 'consisting essentially of' occupies a middle ground between "comprising" and 'consisting of'.

Where applicants have defined an invention or a portion thereof with an open-ended term such as "comprising," it should be readily understood that (unless otherwise stated) the description should be interpreted to also include such an invention using the terms "consisting essentially of" or "consisting of."

### EXAMPLE 1 (for reference):

### Polystyrene Foam Extrusion with Slit Die using Neat Z-HFO-1336mzz as the Blowing Agent

This example demonstrates the use of Z-HFO-1336mzz blowing agent to produce polystyrene foam insulation exhibiting uniform closed cells, smooth skin, and low density. Macrovoids and blowholes are not present in the foam insulation. The polystyrene used in this example is styrene homopolymer available as Nova 1600 polystyrene having a melt flow rate of 6 g/10 min. A nucleating agent (nucleator), namely magnesium silicate, is present along with the polystyrene and blowing agent in the molten composition formed within the extruder.

For this example, a 30 mm twin screw laboratory extruder was used with 8 individually controlled, electrically heated zones and water cooled barrels. Extrusion used a slit die.

**Table 1 - Extruder Operating Parameters and Foam Density Achieved**

| | |
|---|---|
| Extruder speed (rpm) | 101 |
| Extrusion rate (Ib/hr) | 7 (3.2 kg/hr) |
| Blowing agent rate (Ib/hr) | 1.8 (0.8 kg/hr) |
| Blowing agent concentration (wt %) | 20.5 |
| Nucleator concentration (wt %) | 0.5 |
| Melt mixing temperature (°C) | 200 |
| Melt mixing pressure (psi) | 3000 (207 Bar) |
| Extrusion temperature (°C) | 131 |
| Extrusion pressure (psi) | 1500 (103 Bar) |
| Foam density (kg/m³) | 45.3 |
| Cell size range (µM) | 20 - 140 |

### EXAMPLE 2 (for reference):

### Polystyrene Foam Extrusion with Round Die using Neat Z-HFO-1336mzz as the Blowing Agent

This example demonstrates the use of Z-HFO-1336mzz blowing agent to produce polystyrene foam insulation exhibiting uniform closed cells, smooth skin, and low density. Macrovoids and blowholes are not present in the foam insulation. The polystyrene used in this example is styrene homopolymer available as Nova 1600 polystyrene having a melt flow rate of 6 g/10 min. A nucleating agent (nucleator), namely magnesium silicate, is present along with the polystyrene and blowing agent in the molten composition formed within the extruder

For this example, a 30 mm twin screw laboratory extruder was used with 8 individually controlled, electrically heated zones and water cooled barrels. Extrusion used a round die.

**Table 2 - Extruder Operating Parameters and Foam Density Achieved**

| | |
|---|---|
| Extruder speed (rpm) | 100 |
| Extrusion rate (Ib/hr) | 7 (3.2 kg/hr) |
| Blowing agent rate (Ib/hr) | 1.44 (0.65 kg/hr) |
| Blowing agent concentration (wt %) | 17.1 |
| Nucleator concentration (wt %) | 0.5 |
| Melt mixing temperature (°C) | 209 |
| Melt mixing pressure (psi) | 1400 (96.5 Bar) |
| Extrusion temperature (°C) | 115 |
| Extrusion pressure (psi) | 1245 (85.8 Bar) |
| Foam density (kg/m³) | 46.8 |
| Cell size range (µM) | 50-500 |

### EXAMPLE 3 (for reference):

### Solubility of HFO-1336mzz(Z)/HFC-152a Blends in Polystyrene Homopolymer at 179 °C

The solubility of HFO-1336mzz(Z), HFC-152a, HFO-1336mzz(Z)/HFC-152a (50/50 wt% blend) and of reference fluid, HFC-134a/HFC-134/HFC-152a (41/9/50 wt%) in softened polystyrene was assessed. The solubility of a fluid was quantified as the increase of the weight of a softened polystyrene sample resulting from the absorption of the selected blowing agent fluid. The solubility of the above fluids in softened polystyrene was determined by the following procedure:
A 78 gram polystyrene sample was loaded into a 125 cc stainless steel Parr^{©} reactor. The reactor was mounted to inlet/outlet piping manifold, sealed, evacuated, weighed, and immersed in an oil bath. The reactor was loaded with an amount of blowing agent in excess of its expected solubility using a HiP high pressure piston screw pump (made by High Pressure Equipment Company). The oil bath was heated to 179°C in about 90 minutes and was kept at 179°C for 30 minutes. The system pressure was monitored and the final pressure, analogous to the pressure in an extruder used in the foaming process, was recorded. The Parr^{©} reactor was removed from the oil bath and cooled to room temperature. The reactor (containing re-solidified polystyrene) was drained/vented from blowing agent remaining un-dissolved in the polystyrene. The reactor was re-weighed. The measured reactor weight gain was used to calculate solubility at the selected temperature of 179°C and recorded final pressure, as a wt% based on the original weight of the polystyrene according to the following equation: solubility (wt%) = (weight gain ÷ 78) X 100.

Table 3 compares the solubility of a 50/50 wt% HFO-1336mzz(Z)/HFC-152a blend in polystyrene homo-polymer CX-5197 (Melt Flow Index of 4.5-5.0 produced by Total) at 179°C to that of a HFO-136mzz(Z), HFC-152a and reference blowing agent HFC-134a/HFC-134/HFC-152a (41/9/50 wt%).

**Table 3**

| psia | Z/1336/152a (50:50) | Z-1336 | 152a | 134a/134/152a (41/9/50) |
|---|---|---|---|---|
| 800 | | 5.3 | | |
| 1000 | | | | 6 |
| 1300 | 8.7 | | | |
| 1700 | | | 8.5 | |
| 1750 | | 5.5 | | |
| 2300 | 9.7 | | | 9.2 |
| 2500 | | 5.8 | 9.9 | |
| 3000 | 10.5 | | | |

Neat HFO-1336mzz(Z) solubility in softened polystyrene at 179 °C was lower than the solubility of the reference fluid and the solubility of HFC-152a. However, HFO-1336mzz(Z)/HFC-152a (50/50 wt%) blend solubility in polystyrene was, surprisingly, higher than the solubility of either of its components, namely, neat HFO-1336mzz(Z) and neat HFC-152a (at pressures at least up to about 2500 psia). HFO-1336mzz(Z)/HFC-152a (50/50 wt%) blend solubility in polystyrene was also higher than the solubility of the reference fluid.

### EXAMPLE 4:

### Polystyrene Foam Extrusion using Z-HFO-1336mzz/HFC-152a Blends Containing up to 56 wt% Z-HFO-1336mzz as the Blowing Agent

This example demonstrates the use of Z-HFO-1336mzz/HFC-152a blends containing up to 56 wt% Z-HFO-1336mzz as the blowing agent to produce polystyrene foam insulation exhibiting uniform closed cells, smooth skin, and low density. Macrovoids and blowholes are not present in the foam insulation. The polystyrene used in this example is styrene homopolymer available by Total Petrochemicals as PS 535B having a melt flow rate of 4 g/10 min. A nucleating agent (nucleator), namely talc, is present along with the polystyrene and blowing agent in the molten composition formed within the extruder.

For this example, a 50 mm twin screw laboratory extruder was used with 9 individually controlled, electrically heated zones. The first four zones of the extruder were used to heat and soften the polymer. The remaining barrel sections, from the blowing agent injection location to the end of the extruder, were set at selected lower temperatures. An annular die with a 3 mm opening was used in extruding foamed rod specimens.

**Table 4 - Extruder Operating Parameters and Foam Density Achieved**

| | Run# | 1* | 2* | 31 | 29 | 6 | 24 | 10 |
|---|---|---|---|---|---|---|---|---|
| HFO-1336mzz(Z) | wt% | 0 | 0 | 13 | 13 | 27 | 39 | 56 |
| HFC-152a | wt% | 100 | 100 | 87 | 87 | 73 | 61 | 44 |
| Extruder rotational speed | rpm | 40 | 40 | 40 | 40 | 40 | 40 | 40 |
| Polystyrene flow rate | kg/hr | 19.93 | 19.93 | 20.28 | 20.28 | 19.93 | 19.93 | 19.93 |
| Nucleator flow rate | kg/hr | 0.07 | 0.07 | 0.07 | 0.07 | 0.07 | 0.07 | 0.07 |
| Nucleator proportion in the solids (polystyrene+nucleat or) feed | wt% | 0.35 | 0.35 | 0.34 | 0.34 | 0.35 | 0.35 | 0.35 |
| Blowing agent flow rate | kg/hr | 1.40 | 1.42 | 1.91 | 1.76 | 1.61 | 1.99 | 1.93 |
| Total Blowing agent proportion in foamable composition (polystyrene+nucleat or+blowing agent) | wt% | 6.52 | 6.61 | 8.57 | 7.97 | 7.47 | 9.06 | 8.81 |
| Total BA | moles/ kg resin | 1.06 | 1.07 | 1.31 | 1.22 | 1.03 | 1.16 | 0.98 |
| Extrusion Temperature | °C | 137 | 132 | 123 | 133 | 131 | 124 | 129 |
| Extrusion Pressure | psi | 850 | 1120 | 1000 | 1070 | 1080 | 920 | 1200 |
| Effective Foam Density | kg/m³ | 35 | 38 | 33 | 33 | 38 | 39 | 41 |

| | | | | | | | | |
|---|---|---|---|---|---|---|---|---|
| * for reference | | | | | | | | |

## Claims

1. A process for preparing a thermoplastic polymer foam, comprising
(a) providing a foamable composition comprising a thermoplastic polymer and a blowing agent, wherein the blowing agent comprises from 10% to 60% by weight Z-1,1,1,4,4,4-hexafluoro-2-butene (Z-HFO-1336mzz) and from 40% to 90% by weight 1,1-difluoroethane (HFC-152a), and wherein said thermoplastic polymer comprises polystyrene homopolymer, a polystyrene copolymer, styrene-acrylonitrile copolymer, or blends thereof.
(b) expanding said foamable composition to produce a closed cell, smooth skin polymer foam, having a density of less than 42 kg/m³ measured according to ISO method 845-85.

2. The process of claim 1, wherein said thermoplastic polymer is polystyrene homopolymer.

3. The process of claim 1, wherein said foamed thermoplastic polymer comprising polystyrene has at least 80% closed cells, measured according to ASTM method D6226-05.

4. The process of claim 1, wherein said foamable composition comprises nucleating agent.

5. The process of claim 4, wherein said nucleating agent comprises graphite.

6. The process of claim 1, wherein said foamable composition further comprises a flame retardant.

7. The process of claim 6, wherein said flame retardant comprises a polymeric flame retardant.

8. A foam product comprising a thermoplastic polymer selected from the group consisting of polystyrene homopolymer, a polystyrene copolymer, styrene-acrylonitrile copolymer, or blends thereof, defining a plurality of cells having an average cell size, and a blowing agent comprising from 10% to 60% by weight Z-1,1,1,4,4,4-hexafluoro-2-butene (Z-HFO-1336mzz) and from 40% to 90% by weight 1,1-difluoroethane (HFC-152a),
having a density of less than 42 kg/m³, according to ISO method 845-85,
wherein the thermoplastic polymer has a melt flow rate of less than 25 g/ 10 min determined in accordance with ASTM D 1238 at 200°C and using a 5 kg weight on the molten polymer.

9. The foam product of claim 8, wherein the average cell size is between 0.02 mm and 5 mm.

10. The foam product of claim 8, wherein the blowing agent is 10% by weight or less of the total product.

11. The foam product of claim 8, wherein the thermoplastic polymer is polystyrene.

12. The foam product of claim 8, wherein the polystyrene copolymer is a copolymer of styrene and acrylonitrile.

13. The foam product of claim 8, having a density of 39 kg/m³ or less measured according to ISO method 845-85.

## Patentansprüche

1. Verfahren für die Herstellung eines thermoplastischen Polymerschaumstoffs, umfassend
(a) Bereitstellen einer schäumbaren Zusammensetzung umfassend ein thermoplastisches Polymer und ein Treibmittel, wobei das Treibmittel 10 bis 60 Gew.-% Z-1,1,1,4,4,4-Hexafluor-2-buten (Z-HFO-1336mzz) und 40 bis 90 Gew.-% 1,1-Difluorethan (HFC-152a) umfasst und wobei das thermoplastische Polymer Polystyrolhomopolymer, ein Polystyrolcopolymer, Styrol-Acrylnitril-Copolymer oder Mischungen davon umfasst,
(b) Expandieren der schäumbaren Zusammensetzung, um einen geschlossenzelligen, glatthäutigen Polymerschaumstoff herzustellen, der eine Dichte von weniger als 42 kg/m³, der ISO-Methode 845-85 entsprechend gemessen, aufweist.

2. Verfahren nach Anspruch 1, wobei das thermoplastische Polymer Polystyrolhomopolymer ist.

3. Verfahren nach Anspruch 1, wobei das geschäumte thermoplastische Polymer, das Polystyrol umfasst, mindestens 80 % geschlossene Zellen, der ASTM-Methode D6226-05 entsprechend gemessen, aufweist.

4. Verfahren nach Anspruch 1, wobei die schäumbare Zusammensetzung einen Keimbildner umfasst.

5. Verfahren nach Anspruch 4, wobei der Keimbildner Graphit umfasst.

6. Verfahren nach Anspruch 1, wobei die schäumbare Zusammensetzung ferner ein flammhemmendes Mittel umfasst.

7. Verfahren nach Anspruch 6, wobei das flammhemmende Mittel ein polymeres flammhemmendes Mittel umfasst.

8. Schaumstoffprodukt umfassend ein thermoplastisches Polymer ausgewählt aus der Gruppe bestehend aus einem Polystyrolhomopolymer, einem Polystyrolcopolymer, einem Styrol-Acrylnitril-Copolymer oder Mischungen davon, das eine Mehrzahl von Zellen definiert, die eine durchschnittliche Zellgröße aufweisen, und ein Treibmittel umfassend 10 bis 60 Gew.-% Z-1,1,1,4,4,4-Hexafluor-2-buten (Z-HFO-1336mzz) und 40 bis 90 Gew.-% 1,1-Difluorethan (HFC-152a),
das eine Dichte von weniger als 42 kg/m³ der ISO-Methode 845-85 entsprechend aufweist,
wobei das thermoplastische Polymer eine Schmelzfließrate von weniger als 25 g/10 min, ASTM D 1238 entsprechend bei 200 °C und unter Anwendung eines Gewichts von 5 kg an dem geschmolzenen Polymer bestimmt, aufweist.

9. Schaumstoffprodukt nach Anspruch 8, wobei die durchschnittliche Zellgröße zwischen 0,02 mm und 5 mm liegt.

10. Schaumstoffprodukt nach Anspruch 8, wobei das Treibmittel 10 Gew.-% oder weniger des gesamten Produkts beträgt.

11. Schaumstoffprodukt nach Anspruch 8, wobei das thermoplastische Polymer Polystyrol ist.

12. Schaumstoffprodukt nach Anspruch 8, wobei das Polystyrolcopolymer ein Copolymer von Styrol und Acrylnitril ist.

13. Schaumstoffprodukt nach Anspruch 8, das eine Dichte von 39 kg/m³ oder weniger, der ISO-Methode 845-85 entsprechend gemessen, aufweist.

## Revendications

1. Procédé de préparation d'une mousse polymère thermoplastique, comprenant
(a) la fourniture d'une composition expansible comprenant un polymère thermoplastique et un agent de soufflage, l'agent de soufflage comprenant de 10 % à 60 % en poids de Z-1,1,1,4,4,4-hexafluoro-2-butène (Z-HFO-1336mzz) et de 40 % à 90 % en poids de 1,1-difluoroéthane (HFC-152a), et ledit polymère thermoplastique comprenant un homopolymère de polystyrène, un copolymère de polystyrène, un copolymère de styrène-acrylonitrile, ou des mélanges de ceux-ci,
(b) l'expansion de ladite composition expansible pour produire une mousse polymère à peau lisse, à alvéoles fermées, ayant une densité inférieure à 42 kg/m³ mesurée selon la méthode ISO 845-85.

2. Procédé selon la revendication 1, ledit polymère thermoplastique étant un homopolymère de polystyrène.

3. Procédé selon la revendication 1, ledit polymère thermoplastique expansé comprenant du polystyrène ayant au moins 80 % d'alvéoles fermées, mesurées selon la méthode ASTM D6226-05.

4. Procédé selon la revendication 1, ladite composition expansible comprenant un agent de nucléation.

5. Procédé selon la revendication 4, ledit agent de nucléation comprenant du graphite.

6. Procédé selon la revendication 1, ladite composition expansible comprenant en outre un retardateur de flamme.

7. Procédé selon la revendication 6, ledit retardateur de flamme comprenant un retardateur de flamme polymère.

8. Produit expansé comprenant un polymère thermoplastique sélectionné dans le groupe constitué d'un homopolymère de polystyrène, d'un copolymère de polystyrène, d'un copolymère de styrène-acrylonitrile, ou de mélanges de ceux-ci, définissant une pluralité d'alvéoles ayant une taille moyenne d'alvéole, et un agent de soufflage comprenant de 10% à 60% en poids de Z-1,1,1,4,4,4-hexafluoro-2-butène (Z-HFO-1336mzz) et de 40 % à 90 % en poids de 1,1-difluoroéthane (HFC-152a), ayant une densité inférieure à 42 kg/m³, selon la méthode ISO 845-85, le polymère thermoplastique ayant un débit d'écoulement de masse fondue inférieur à 25 g/10 min déterminé selon la norme ASTM D 1238 à 200°C et en utilisant un poids de 5 kg sur le polymère fondu.

9. Produit expansé selon la revendication 8, la taille moyenne des alvéoles étant comprise entre 0,02 mm et 5 mm.

10. Produit expansé selon la revendication 8, l'agent de soufflage étant de 10 % en poids ou moins du produit total.

11. Produit expansé selon la revendication 8, le polymère thermoplastique étant le polystyrène.

12. Produit expansé selon la revendication 8, le copolymère de polystyrène étant un copolymère de styrène et d'acrylonitrile.

13. Produit expansé selon la revendication 8, ayant une densité de 39 kg/m³ ou moins mesurée selon la méthode ISO 845-85.
